# EUROPÄISCHE PATENTSCHRIFT

(11) **EP 1 714 911 B1**
(45) Veröffentlichungstag und Bekanntmachung des Hinweises auf die Patenterteilung: **13.02.2008**
(21) Anmeldenummer: 06007358.2
(22) Anmeldetag: 07.04.2006
(51) Int. Cl.: B65D 81/34

(54) **Lebensmittelverpackung**
Food container
Emballage de produit alimentaire

(30) Priorität: 19.04.2005 AT 6492005
(43) Veröffentlichungstag der Anmeldung: 25.10.2006
(73) Patentinhaber: PAWAG Verpackungen Gesellschaft m.b.H., 6960 Wolfurt (AT)
(72) Erfinder: Ittensohn, Edgar, 9425 Thal (CH)
(74) Vertreter: Hofmann, Ralf U.

(56) Entgegenhaltungen:
- EP-A- 0 569 646
- DE-A1- 3 005 051
- US-A- 4 864 089
- US-A1- 2005 031 814

## Beschreibung

Die Erfindung betrifft eine Lebensmittelverpackung, in der ein darin verpacktes Lebensmittel in einem Mikrowellengerät erhitzbar ist, wobei die Lebensmittelverpackung aus einem Verbundmaterial ausgebildet ist, welches metallhaltig ist und mindestens zwei Lagen umfasst, die durch einen Kaschierkleber miteinander verbunden sind.

Für wasserfreie bzw. weitgehend wasserfreie Lebensmittelprodukte besteht das Problem, dass diese nicht direkt in einem Mikrowellengerät erhitzt werden können. Es ist bereits eine Lebensmittelverpackung bekanntgeworden, in der ein darin verpacktes Lebensmittel in einem Mikrowellengerät erhitzbar ist. Diese besteht aus einem Verbundmaterial, welches zwei miteinander verbundene Papierlagen umfasst. In einem Bereich ist zwischen den Papierlagen ein quadratisches Folienteil aus Polyester eingebracht, welches mit einer sehr geringen Metallisierung versehen ist, die durch Aufdampfen von Metallpartikeln ausgebildet ist. Wenn ein wasserfreies bzw. weitgehend wasserfreies Lebensmittelprodukt in einer solchen Lebensmittelverpackung verpackt wird, so kann dieses dadurch in einem Mikrowellengerät erhitzt werden, dass sich die Metallisierung unter der Einwirkung der Mikrowellen erhitzt. Es erhitzt sich folglich auch und das in der Verpackung verpackte Lebensmittelprodukt. Nachteilig an diesem bekannten Verbundmaterial ist es, dass die Aufbringung der Metallisierung und Einbringung des die Metallisierung aufweisenden Folienteils relativ aufwändig ist. Eine Aufbringung einer Metallisierung erfolgt durch ein Beschichtungsverfahren unter Vakuum in einer Vakuumkammer.

Aufgabe der Erfindung ist es, eine einfach und kostengünstig herstellbare Lebensmittelverpackung der eingangs genannten Art bereitzustellen. Erfindungsgemäß gelingt dies durch eine Lebensmittelverpackung mit den Merkmalen des Patentanspruchs 1.

Durch die erfindungsgemäße Zugabe von Metallpartikeln zum Kaschierkleber, durch den mindestens zwei Lagen des Verbundmaterials miteinander verbunden sind, wird eine einfache und kostengünstige Herstellung einer Lebensmittelverpackung ermöglicht, mit der ein verpacktes Lebensmittel in einem Mikrowellengerät erhitzbar ist.

Durch die dem Kaschierkleber beigemischten Metallpartikel erhitzt sich die aus dem erfindungsgemäßen Verbundmaterial hergestellte Lebensmittelverpackung, wenn diese der Strahlung des Mikrowellengeräts ausgesetzt wird. Es kommt dadurch auch zu einer Erhitzung des verpackten Lebensmittels, auch wenn dieses selbst nicht oder nur wenig durch die Mikrowellenstrahlung erhitzt wird, wie dies bei wasserfreien oder weitgehend wasserfreien Lebensmit-Eine Lebensmittelverpackung aus einem Verbundmaterial, bei denen zwei Lagen durch einen metallpartikelhaltigen Klebstoff miteinander verbunden sind, ist aus der DE 3005 051 A1 an sich bereits bekannt. Die darin beschriebene Verpackung für Lebensmittel, insbesondere Schokolade, umfasst von außen nach innen eine Metallschicht, eine Papierschicht und eine transparente Kunststoffschicht. Zwischen der Papierschicht und der transparenten Kunststoffschicht befindet sich eine Klebstoffschicht, welche eine so große Menge an Metallpartikeln enthält, dass ein metallischer Glanz erhalten wird. Es soll dadurch der Eindruck einer Metallschicht erweckt werden. Eine derartige Verpackung ist keinesfalls zur Erhitzung eines Lebensmittels in einer Mikrowelle geeignet. Durch die äußere Metallschicht werden die Mikrowellen in unkontrollierter Weise reflektiert, was sogar zur Zerstörung des Mikrowellengeräts führen kann. Würde die äußere Metallschicht weggelassen, so würde der gleiche Effekt durch die hohe Konzentration von Metallpartikeln, um einen metallischen Glanz der Klebstoffschicht zu erreichen, auch durch diese Metallpartikel enthaltende Klebstoffschicht entstehen.

Günstigerweise enthält der metallpartikelhaltige Kaschierkleber der erfindungsgemäßen Lebensmittelverpackung mindestens 10 Gew% Metallpartikel, wobei ein Wert von mindestens 20 Gew% bevorzugt ist. Bei der Ausbildung einer Lebensmittelverpackung aus einem solchen erfindungsgemäßen Verbundmaterial kann eine effektive Erhitzung des wasserfreien oder wasserarmen Lebensmittels in der Mikrowelle erzielt werden. Vorzugsweise liegt der maximale Anteil an Metallpartikeln bei 50 Gew%.

Die beiden durch den Metallpartikel enthaltenden Kaschierkleber miteinander verbundenen Lagen können beispielsweise aus einem Kunststoff bestehen, wie er für Folienlagen solcher Verbundmaterialien herkömmlicherweise eingesetzt wird. Statt der Ausbildung aus Kunststoff könnte eine oder beide der miteinander verbundenen Lagen auch aus Papier, Zellglas (bzw. Zellulose) oder PLA (Polylacticacid) oder einem anderen herkömmlicherweise für eine Lage einer Lebensmittelverpackung eingesetzten Material bestehen.

Das Verbundmaterial kann gegebenenfalls nur aus den beiden durch den Metallpartikel enthaltenden Kaschierkleber verklebten Lagen bestehen oder es kann noch weitere Lagen aufweisen. Hierbei können nur zwei Lagen mittels eines Metallpartikel aufweisenden Kaschierklebers miteinander verbunden sein oder mehr als zwei Lagen können durch einen Metallpartikel enthaltenden Kaschierkleber miteinander verklebt sein.

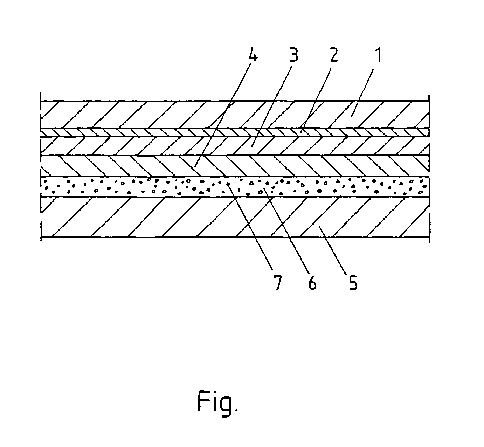

Weitere Vorteile und Einzelheiten der Erfindung werden im Folgenden anhand der beiliegenden Zeichnung erläutert. In dieser zeigt die einzige Figur einen schematischen Querschnitt durch ein Ausführungsbeispiel eines eine erfindungsgemäße Lebensmittelverpackung ausbildenden Verbundmaterials.

In der Figur ist ein beispielhafter Aufbau eines Verbundmaterials dargestellt, aus dem eine erfindungsgemäße Lebensmittelverpackung ausgebildet ist, in der ein verpacktes Lebensmittel in einem Mikrowellengerät erhitzbar ist. Bei dieser Ausführungsform umfasst das Verbundmaterial, aus dem die Lebensmittelverpackung ausgebildet ist, eine äußere Druckträgerlage 1, wobei hier an der Unterseite dieser Druckträgerlage 1 eine Druckfarbe 2 aufgedruckt ist, die einen Aufdruck ausbildet. Der Aufdruck erfolgt in einem Konterdruckverfahren. Stattdessen könnte auch an der Oberseite bzw. Außenseite der Druckträgerlage 1 ein Aufdruck aufgebracht werden, der dann vorzugsweise mit einer Lackschicht abgedeckt wird.

Die Druckträgerlage 1 kann beispielsweise aus Polyester bestehen und eine Dicke im Bereich 10 µm bis 15 µm (z. B. 12 µm) aufweisen. Eine solche Druckträgerlage ist nicht nur gut bedruckbar, sondern bildet auch einen vorteilhaften, insbesondere nicht hydroskopischen, äußeren Abschluss des Verbundmaterials. Auch weist eine solche Druckträgerlage 1 aus Polyester eine gute Dimensionsstabilität auf.

Die Druckträgerlage 1 mit der aufgebrachten Druckfarbe 2 ist durch eine Schicht eines Kaschierklebers 3 mit einer mittleren Lage 4 in herkömmlicher Weise verbunden. Die mittlere Lage 4 kann beispielsweise aus Polyamid bestehen und beispielsweise eine Dicke im Bereich zwischen 10 µm und 20 µm (z. B. 15 µm) aufweisen. Eine solche Lage 4 aus Polyamid gibt dem Verbundmaterial eine gute mechanische Festigkeit.

Die mittlere Lage 4 ist mit der inneren Lage 5 über eine Schicht eines Kaschierklebers 6 verklebt. Die innere Lage 5 bildet bei der gezeigten Ausführungsform eine Siegellage, um eine aus dem Verbundmaterial gebildete Verpackung zu verschweißen. Die innere Lage 5 besteht hierzu aus einem Siegelmedium, dessen Schmelzpunkt an die gewünschte Anwendung angepasst ist und ausreichend hoch ist, um bei der Erhitzung des Verbundmaterials in der Mikrowelle nicht zu schmelzen. Beispielsweise kann die innere Lage aus CPP (Cast Polypropylen) bestehen und beispielsweise eine Dicke im Bereich zwischen 30 und 70 µm (z. B. 50 µm) aufweisen.

Der die Lagen 4, 5 miteinander verklebende Kaschierkleber 6 enthält Metallpartikel 7. Diese wurden dem Kaschierkleber, der ansonsten in herkömmlicher Weise ausgebildet sein kann, vor der Verklebung der Lagen 4, 5 beigemischt. Die Verklebung der Lagen 4, 5 kann in herkömmlicher Weise durch Auftrag des Kaschierklebers 6 auf eine der beiden Lagen und Zusammenfügen der beiden Lagen erfolgen. Zur Verklebung von zwei Lagen mittels eines Kaschierklebers sind Kaschierwalzen bekannt.

Der Anteil der im Kaschierkleber 6 enthaltenen Metallpartikel 7 kann von der Art des in der aus dem Verbundmaterial gebildeten Verpackung in der Mikrowelle zu erhitzenden Lebensmittelprodukts abhängen. Bei einem weitgehend wasserfreien Produkt kann dieser Anteil größer gewählt werden als bei einem demgegenüber feuchteren Produkt. Günstigerweise enthält der Kaschierkleber 6 im fertiggestellten Zustand des Verbundmaterials mindestens 10 Gew% Metallpartikel 7, wobei ein Wert von mindestens 20 Gew% bevorzugt ist. Bevorzugt ist weiters ein maximaler Anteil an Metallpartikeln 7 von 50 Gew%. Beispielsweise kann der Anteil von Metallpartikeln 7 40 Gew% des die Schicht zwischen den beiden Lagen 4, 5 bildenden Kaschierklebers 6 betragen. Diese Gew%-Angaben beziehen sich jeweils auf den fertiggestellten Zustand des Verbundmaterials.

Die Größe der Metallpartikel 7 ist günstigerweise kleiner als 10 µm, wobei ein Wert von ≤ 5 µm bevorzugt ist.

Beispielsweise können die Metallpartikel 7 aus Aluminium bestehen.

Beim Kaschierkleber 6 kann es sich um einen beim Auftragen lösungsmittelhältigen Kaschierkleber handeln. Andererseits kann der Kaschierkleber 6 auch ein lösungsmittelfreier Kaschierkleber sein. Hierbei handelt es sich häufig um Zwei-Komponenten-Kaschierkleber, die unmittelbar vor dem Kaschierklebevorgang miteinander vermischt werden.

Aus dem beschriebenen flächigen, mehr oder weniger flexiblen Verbundmaterial kann in herkömmlicher Weise eine Lebensmittelverpackung ausgebildet und befüllt werden. Das Verbundmaterial kann für vertikale und horizontale Abpackanlagen ausgebildet sein. Das Verbundmaterial kann auch als Deckelfolien-Material ausgebildet sein.

In Bezug auf die Versiegelung der Lebensmittelverpackung kann das Verbundmaterial festversiegelnd, peelend und teilweise peelend ausgebildet sein.

Verschiedene andere Ausbildungen eines erfindungsgemäßen Verbundmaterials sind im Hinblick auf die Anzahl der Schichten und die Materialien, aus denen die Schichten bestehen, die Schichtdicken usw. denkbar und möglich. Es können auch zwei oder mehrere Verbindungen zwischen benachbarten Lagen durch Metallpartikel enthaltende Kaschierkleber gebildet werden. Insgesamt kann das Verbundmaterial als im Wesentlichen aus Kunststoff bestehende Folie oder folienartig (im Bezug auf die geometrische Form und Flexibilität) ausgebildet sein.

### Legende zu den Hinweisziffern:

- 1: Druckträgerlage
- 2: Druckfarbe
- 3: Kaschierkleber
- 4: mittlere Lage
- 5: innere Lage
- 6: Kaschierkleber
- 7: Metallpartikel

## Patentansprüche

1. Lebensmittelverpackung, in der ein darin verpacktes Lebensmittel in einem Mikrowellengerät erhitzbar ist, wobei die Lebensmittelverpackung aus einem flexiblen, flächigen Verbundmaterial ausgebildet ist, welches metallhaltig ist und mindestens zwei Lagen (4, 5) umfasst, die durch einen Kaschierkleber (6) miteinander verbunden sind, **dadurch gekennzeichnet, dass** der Kaschierkleber (6) Metallpartikel (7) enthält.

2. Lebensmittelverpackung nach Anspruch 1, **dadurch gekennzeichnet, dass** der Kaschierkleber (6) im fertiggestellten Zustand des die Lebensmittelverpackung ausbildenden Verbundmaterials mindestens 10 Gew%, vorzugsweise mindestens 20 Gew% Metallpartikel enthält.

3. Lebensmittelverpackung nach Anspruch 1 oder Anspruch 2, **dadurch gekennzeichnet, dass** der Kaschierkleber (6) im fertiggestellten Zustand des die Lebensmittelverpackung ausbildenden Verbundmaterials maximal 20 Gew% Metallpartikel enthält.

4. Lebensmittelverpackung nach einem der Ansprüche 1 bis 3, **dadurch gekennzeichnet, dass** die Metallpartikel (7) aus Aluminium bestehen.

5. Lebensmittelverpackung nach einem der Ansprüche 1 bis 4, **dadurch gekennzeichnet, dass** jede der beiden miteinander durch den Metallpartikel (7) enthaltenden Kaschierkleber (6) verbundenen Lagen (4, 5) aus einem der Materialien Kunststoff, Papier, Zellglas oder PLA (Polylacticacid) besteht.

6. Lebensmittelverpackung nach einem der Ansprüche 1 bis 5, **dadurch gekennzeichnet, dass** das die Lebensmittelverpackung ausbildende Verbundmaterial neben den beiden genannten durch den Metallpartikel (7) enthaltenden Kaschierkleber (6) verbundenen Lagen (4, 5) mindestens eine weitere Lage (1) umfasst.

7. Lebensmittelverpackung nach Anspruch 6, **dadurch gekennzeichnet, dass** jede der mindestens einen weiteren Lagen (1) aus einem der Materialien Kunststoff, Papier, Zellglas oder PLA (Polylacticacid) besteht.

8. Lebensmittelverpackung nach einem der Ansprüche 1 bis 7, **dadurch gekennzeichnet, dass** das die Lebensmittelverpackung ausbildende Verbundmaterial eine äußere Druckträgerlage (1) aufweist, die vorzugsweise aus Polyester besteht.

9. Lebensmittelverpackung nach einem der Ansprüche 1 bis 8, **dadurch gekennzeichnet, dass** das die Lebensmittelverpackung ausbildende Verbundmaterial eine innere Siegellage (5) aufweist, die vorzugsweise aus Cast Polypropylen (CPP) besteht.

10. Lebensmittelverpackung nach Anspruch 9, **dadurch gekennzeichnet, dass** die innere Lage (5) eine von zweien durch metallhaltigen Kaschierkleber verbundene Lagen (4, 5) ist.

11. Lebensmittelverpackung nach einem der Ansprüche 1 bis 10, **dadurch gekennzeichnet, dass** das die Lebensmittelverpackung ausbildende Verbundmaterial eine mittlere Lage (4) aufweist, die vorzugsweise aus Polyamid besteht.

## Claims

1. Food packaging in which food packaged therein can be heated in a microwave device, the food packaging being formed of a flexible, flat composite material which contains metal and which comprises at least two layers (4, 5) connected to one another by a laminating adhesive (6), **characterised in that** the laminating adhesive (6) contains metal particles (7).

2. Food packaging according to claim 1, **characterised in that** the laminating adhesive (6) contains at least 10% by weight, preferably at least 20% by weight, of metal particles in the finished state of the composite material forming the food packaging.

3. Food packaging according to claim 1 or claim 2, **characterised in that** the laminating adhesive (6) contains maximum 20% by weight of metal particles in the finished state of the composite material forming the food packaging.

4. Food packaging according to any one of claims 1 to 3, **characterised in that** the metal particles (7) are composed of aluminium.

5. Food packaging according to any one of claims 1 to 4, **characterised in that** each of the two layers (4, 5) connected to one another by the laminating adhesive (6) containing metal particles (7) is composed of one material from among a plastics material, paper, cellulose film or PLA (polylactic acid).

6. Food packaging according to any one of claims 1 to 5, **characterised in that** the composite material forming the food packaging comprises at least one further layer (1) in addition to the two above-mentioned layers (4, 5) connected by the laminating adhesive (6) containing metal particles (7).

7. Food packaging according to claim 6, **characterised in that** each of the at least one further layers (1) is composed of one material from among a plastics material, paper, cellulose film or PLA (polylactic acid).

8. Food packaging according to any one of claims 1 to 7, **characterised in that** the composite material forming the food packaging has an outer print substrate layer (1) preferably composed of polyester.

9. Food packaging according to any one of claims 1 to 8, **characterised in that** the composite material forming the food packaging has an inner sealing layer (5) preferably composed of Cast Polypropylene (CPP).

10. Food packaging according to claim 9, **characterised in that** the inner layer (5) is one of two layers (4, 5) connected by metal-containing laminating adhesive.

11. Food packaging according to any one of claims 1 to 10, **characterised in that** the composite material forming the food packaging has a middle layer (4) preferably composed of polyamide.

## Revendications

1. Emballage de produit alimentaire, dans lequel un produit alimentaire emballé peut être chauffé dans un appareil à micro-ondes, l'emballage de produit alimentaire étant constitué d'un matériau composite flexible plat contenant du métal et comprenant au moins deux couches (4, 5) reliées l'une à l'autre par un adhésif de doublage (6),
**caractérisé en ce que**
l'adhésif de doublage (6) contient des particules métalliques (7).

2. Emballage de produit alimentaire selon la revendication 1,
**caractérisé en ce que**
l'adhésif de doublage (6), dans l'état fini du matériau composite constituant l'emballage de produit alimentaire, contient au moins 10 % en poids, de préférence au moins 20 % en poids, de particules métalliques.

3. Emballage de produit alimentaire selon la revendication 1 ou la revendication 2,
**caractérisé en ce que**
l'adhésif de doublage (6), dans l'état fini du matériau composite constituant l'emballage de produit alimentaire, contient au maximum 20 % en poids de particules métalliques.

4. Emballage de produit alimentaire selon l'une des revendications 1 à 3,
**caractérisé en ce que**
les particules métalliques (7) se composent d'aluminium.

5. Emballage de produit alimentaire selon l'une des revendications 1 à 4,
**caractérisé en ce que**
chacune des deux couches (4, 5) reliées l'une à l'autre par l'adhésif de doublage (6) contenant des particules métalliques (7) se compose de l'un des matériaux que sont la matière synthétique, le papier, la cellophane ou le PLA (acide polylactique).

6. Emballage de produit alimentaire selon l'une des revendications 1 à 5,
**caractérisé en ce que**
le matériau composite constituant l'emballage de produit alimentaire comprend, outre les deux couches (4, 5) mentionnées, reliées par l'adhésif de doublage (6) contenant des particules métalliques (7), au moins une autre couche (1).

7. Emballage de produit alimentaire selon la revendication 6,
**caractérisé en ce que**
chacune de l'au moins une autre couche (1) se compose de l'un des matériaux que sont la matière synthétique, le papier, la cellophane ou le PLA (acide polylactique).

8. Emballage de produit alimentaire selon l'une des revendications 1 à 7,
**caractérisé en ce que**
le matériau composite constituant l'emballage de produit alimentaire présente une couche de support d'impression (1) qui se compose de préférence de polyester.

9. Emballage de produit alimentaire selon l'une des revendications 1 à 8,
**caractérisé en ce que**
le matériau composite constituant l'emballage de produit alimentaire présente une couche de scellage intérieure (5) qui se compose de préférence de Cast Polypropylen (CPP).

10. Emballage de produit alimentaire selon la revendication 9,
**caractérisé en ce que**
la couche intérieure (5) est l'une des deux couches (4, 5) reliées par l'adhésif de doublage contenant du métal.

11. Emballage de produit alimentaire selon l'une des revendications 1 à 10,
**caractérisé en ce que**
le matériau composite constituant l'emballage de produit alimentaire présente une couche centrale (4) composée de préférence de polyamide.
